# EUROPEAN PATENT APPLICATION

(11) **EP 1 503 187 A1**
(43) Date of publication of application: **02.02.2005**
(21) Application number: 03028892.2
(22) Date of filing: 16.12.2003
(51) Int. Cl.: G01F 5/00, G01F 1/38

(54) **Flowmeter**

(30) Priority: 11.07.2003 IT MI20031423
(71) Applicant: Salvi, Maurizio, 14129 Bergamo (BG) (IT)
(72) Inventor: Salvi, Maurizio, 14129 Bergamo (BG) (IT)
(74) Representative: Trupiano, Federica

(57) **Abstract**

The present invention relates to a flow rate measuring device (flow meter) of the diaphragm type comprising a calibrated tube, a float moving within said calibrated tube and a return conduit positioned internally to the calibrated tube. The arrangement of the return conduit within the calibrated tube makes cleaning operations simple and economical and minimises the overall dimension of the flow meter. Such an arrangement also provides a minimal number of channelings and hence allows the reduction in the pressure losses generated by the flow meter.

## Description

The present invention relates to a flow rate measuring device (flow meter). In particular the invention relates to a flow meter of the diaphragm type, particularly for large and very large flow rates.

Various types of flow rate measuring devices are known, the aim of which is that of measuring the flow of a liquid, a gas, a fluid in general within a conduit. In particular, in the case of large flow rates, for some time, diaphragm flow rate measuring devices have been proposed. The operation of such devices provides that a pressure loss is established in the fluid which flows within the conduit, a small, by-pass flow rate of the fluid is withdrawn which is directed into a calibrated measuring device and the by-pass flow rate is returned into the conduit. Such a pressure loss is obtained by installing a diaphragm along the conduit, the flow rate of which it is desired to measure. The diaphragm causes a constriction in the cross section of the conduit and the fluid which is flowing there is therefore forced to accelerate at the diaphragm itself and consequently its pressure is reduced. The presence of the diaphragm is therefore necessary in order to obtain a drop in the pressure (pressure loss) of the fluid in a section of the conduit immediately downstream of the diaphragm itself. A by-pass tap draws a by-pass flow rate from the conduit, upstream of the diaphragm, and directs it into a flow meter which allows the surveying of the flow rate flowing through the conduit. Once through the flow meter, the by-pass flow returns to the conduit, through a return tube, downstream of the diaphragm where the fluid flowing has a pressure less than the pressure of the by-pass flow rate fluid, which is therefore not obstructed during its reinsertion. The flow meters traditionally used are constituted by a calibrated glass tube having an inlet connected to the by-pass tap and an outlet connected to the return tube. Inside the calibrated tube there is a float which is acted upon by the by-pass flow rate which passes through the flow meter. Generally, the calibrated tube has a conical profile. Depending on the difference in pressure between the calibrated tube inlet and outlet, and thus according to the pressure loss between one section upstream of the diaphragm and another downstream, the float detects a certain portion of the graduated scale on the calibrated tube. The float therefore works as an indicator of the graduated scale and allows its reading. The value indicated on the scale is a measure of the fluid flow rate flowing within the conduit to which the flow meter is connected. Such a value is obtainable through Bernoulli's law and depends exactly on the pressure loss at the ends of the flow meter itself, such loss being the same as that to which the by-pass flow rate is also subjected. The pressure loss additionally depends on the surface area of the section which is left free between the float and the calibrated tube, and this surface area varies due the fact that the calibrated tube has a conical profile.

In traditional flow meters the calibrated tube is generally made of glass and the by-pass tap and return conduit are made of metal. In particular the return conduit is external to and parallel with the calibrated tube. In particular, when connected in parallel to a conduit, traditional flow meters extend laterally from the conduit itself and provide metal return conduits welded at the ends thereof, so as to form a connection with a water tight seal between the outlet of the calibrated tube and the inlet to the conduit downstream of the diaphragm.

Flow meters may also be installed on a conduit in such a way as to be perpendicular to it.

Traditional flow meters have various drawbacks associated with the fact of the return conduit being envisaged welded in parallel to the calibrated tube. Indeed, firstly, traditional flow meters are difficult to maintain, for example when it is made necessary to clean them. Indeed, any possible debris, accumulations of materials, etc., require long and costly operations for their elimination, such as the cutting out of the return conduit, its cleaning and the renewed welding of the conduit back into its original position. Furthermore repeated welding operations cause the weakening of the metal in the area of the return conduit affected by heating, with possible recooking and hysteresis phenomena of the metal itself. Consequently, after a certain number of cleaning operations, the return conduit may easily break under the pressure of the by-pass flow rate which flows therein. Alternatively, it is possible to intervene on the return conduit by making a hole at one of its two ends, carrying out the necessary operations, for example cleaning, and re-closing the hole, still by welding back the piece initially removed.

Indeed, generally, in the known flow meters, the return conduits are made of metal. These are therefore heavy and require specific surface treatments in order to avoid corrosion, with a consequent burden on their manufacturing costs.

The object of the present invention is that of providing a flow meter which resolves the problems of the known art, allowing easy and economical cleaning operations.

A further object of the invention is that of providing a flow meter having restricted weight and size, which is simple to construct and assemble and which allows a significant reduction in the costs.

Still another object of the present invention is that of providing a flow meter which is minimally prone to corrosion phenomena.

Yet another object of the present invention is that of providing a flow meter which allows reliable and precise measurement.

These and other objects are achieved by a flow rate measuring device (flow meter) of the diaphragm type comprising a calibrated tube, a float moving within said calibrated tube and a return conduit, characterised in that said return conduit is located internally to the calibrated tube.

According to one preferred embodiment of the invention, the return conduit is coaxial with the calibrated tube.

An additional characteristic of the flow meter according to the invention is that of providing a communication chamber between the calibrated tube and the return tube. Preferably, said chamber is formed within a closure element of the calibrated tube.

Generally, the flow meter according to the invention comprises a connecting element to the diaphragm installed within the conduit in which flows the flow rate to be measured, said element being provided with a first channel, called the tap channel, which connects the calibrated tube to the conduit upstream of the diaphragm and to a second channel, called the discharge channel, which connects the return conduit to the conduit downstream of the diaphragm. The tap channel is in communication with the inlet section of the calibrated tube, and has the function of directing a by-pass flow rate, drawn from the conduit, into the tube. The return conduit is internal to the calibrated tube and a float is free to slide therebetween. The return conduit is connected to the calibrated tube through a communication chamber which is present on one closure element of the calibrated tube. The by pass flow rate then flows from the calibrated tube to the return conduit through said chamber and from the return conduit to the discharge channel in order to then re-enter into the conduit. The float provides the measurement of the flow rate by indicating the corresponding value on the scale which is present on the calibrated tube.

The calibrated tube is generally clear so as to allow the observation of the position of the float inside it.

The flow meter may provide a calibrated conical tube, or a calibrated cylindrical tube and, in the second case, the variation in passing cross section along the calibrated tube is obtained by adopting a return conduit having at least one external portion with an inclined profile.

The flow meter may be installed in a direction which is parallel with the conduit or in a direction which is perpendicular thereto. In the first case, the connecting element for the flow meter to the conduit and its internal channels develop essentially at a right angle, whilst in the second case, said connecting element and such channels have a linear development.

Alternatively, the connecting element may be a single element, provided with double outlet channels, with the possibility of installing the flow meter in both the above mentioned directions, by selecting the channel outlets adapted to obtaining the desired configuration and sealing the other outlets.

According to one preferred embodiment, the float is drilled in the middle and slides along the return conduit without coming into contact with the inner walls of the calibrated tube.

According to one preferred embodiment, the float is drilled in the middle and slides along both the return conduit, and against the inner walls of the calibrated tube.

The flow meter according to the invention is of simple construction and, due to the fact of providing the return conduit placed inside the calibrated tube, does not require any welding of the return conduit. Consequently, both assembly, and disassembly of the flow meter are greatly simplified, with savings over costs as well as production and maintenance times. The number of welds and additional seals is furthermore drastically reduced and, consequently, the individual component parts of the flow meter are easily manufactured industrially.

Furthermore, the arrangement of the return conduit within the calibrated tube makes cleaning operations simple and economical and minimises the encumbrance of the flow meter. Such an arrangement also envisages a minimal number of secondary channellings and therefore allows the reduction of the concentrated pressure losses and consequently the total pressure losses generated by the flow meter.

An additional advantage of the invention is that of providing a return conduit which may be also be made from plastic material, and is therefore not prone to corrosion, light and economical, offering increased resistance to the formation of build ups of organic and inorganic substances on the surfaces.

In the case in which the return tube is made from a transparent material, it is not necessary to dismantle the tube itself for inspection, and furthermore the identification by the operator of any malfunctioning due to the presence of air bubbles within the conduit or due to the partial emptying of the by-pass conduit, is simple and immediate.

Furthermore, the flow meter according to the invention allows very accurate and precise readings of the flow rate values in that the float, being guided in its movements by the return conduit and, alternatively, also by the calibrated tube, is subjected to minimal vibrations or fluctuations.

Further characteristics of the invention will be mostly understood and apparent from the detailed description of a preferred, but not exclusive, embodiment of a flow rate measuring device according to the invention, which is illustrated by way of a non limiting indication in the enclosed tables and drawings, wherein:
- figure 1 is a side sectional view of a flow meter according to the invention;
- figure 2 is a sectional view taken along the line A-A of the flow meter in figure 1;
- figure 3 is a perspective view of the float of the flow meter in figure 1;
- figures 4a-4b-4c are sectional views of three possible embodiments of a detail of the flow meter in figure 1.

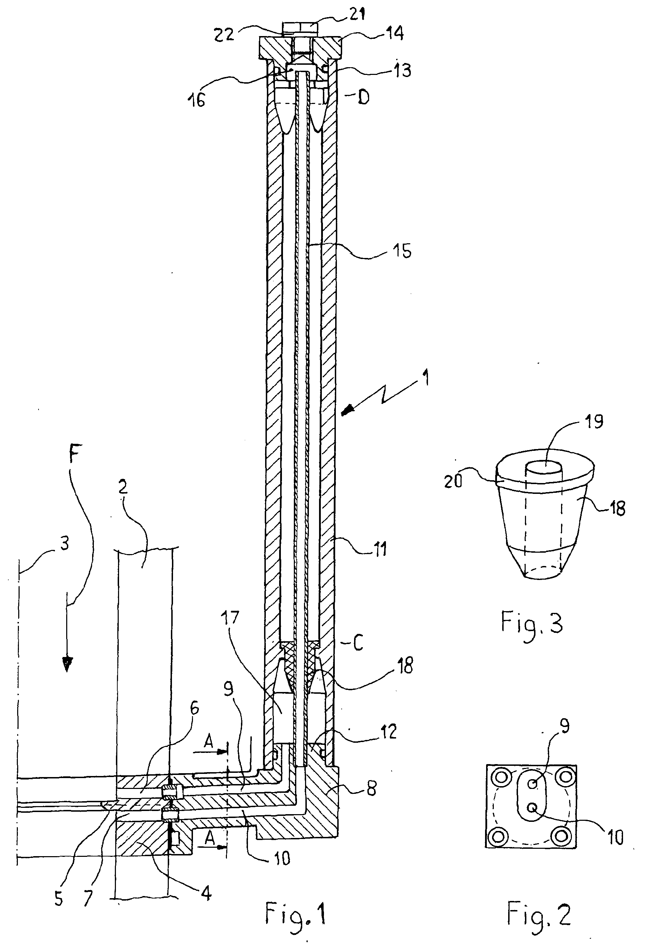

In general, the flow meter according to the invention may be either installed running in parallel with a conduit, or in a position essentially perpendicular to the conduit itself. In figure 1 is illustrated a flow meter 1 according to the invention, installed externally to a conduit 2 having an axis of symmetry 3. Inside the conduit 2 flows a fluid, for example water or air, the flow rate of which it is desired to measure. In figure 1 the direction of flow of the fluid within the conduit 2 is indicated by the direction of arrow F. Along the length of the conduit 2 there is a diaphragm 4 provided with a ring-like section 5 suitable to form a sectional constriction within the conduit 2. The diaphragm 4 is also provided with a tap channel 6 upstream of the cross sectional constriction 5 and a discharge channel 7 downstream of the constriction 5. Channels 6 and 7 may generally have various types of shape and course. In particular, channels 6 and 7 in figure 1 are circular and extend in a direction perpendicular to the axis 3 of the conduit 2, placing the inner volume of the conduit 2 in communication with the outside. A connecting portion 8 of the flow meter 1 is integrally coupled to the diaphragm 4. Such connecting portion 8 is provided with two channels 9 and 10 (figure 2) respectively coupled to channels 6 and 7 such that to ensure a hermetic seal for the fluid under consideration.

To the connecting portion 8 is coupled a calibrated tube 11. In general, the calibrated tube 11 may be directly coupled to the diaphragm 4. In the embodiment illustrated, the calibrated tube 11 is integrally coupled to the connecting portion 8 at one of its special seatings 12. The connecting portion 8 however, must have the minimum possible extension so as to not increase the pressure losses of the channels 9 and 10 therein. The calibrated tube is generally made from a transparent material, for example glass or plastic. In the embodiment in figure 1 the calibrated tube 11 is made of transparent plastic and is provided with a graduated scale (not shown) for reading the flow rate, on the outer surface thereof. Channel 9 communicates the tap channel 6 with the lower conical part 17 of the calibrated tube 11.

Inside the calibrated tube 11 is found a return conduit 15. In general, the shape, position and the material of the return conduit may vary according to the type of fluid, the flow rate of which it is intended to measure.

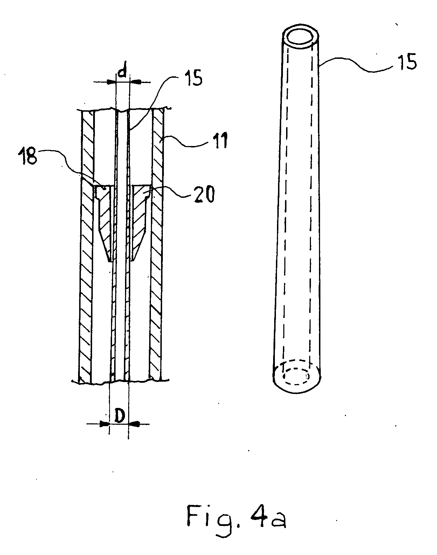

According to one preferred embodiment, the return conduit is substantially cylindrical and coaxial with the calibrated tube. Preferably, the return conduit is made from plastic material. In the embodiment illustrated (figures 1 and 4a-4b-4c) the return conduit 15 is coaxial with the calibrated tube 11 and is coupled, at its lower end, to the discharge channel 10. The coupling between the return conduit 15 and the discharge channel 10 is of a non welded type.

The return conduit 15 may also be made from transparent material. In this case, it is possible to view the interior of the conduit 15 directly from the outside, with the aim of identifying the presence of any obstructions or debris.

The non-engaged end 13 of the calibrated tube 11 may be sealed with a removable closure element (figure 1) shaped so as to create a communicating chamber between the calibrated tube 11 and the return conduit 15. Such removable closure element may be provided with an air vent. In the embodiment illustrated, the calibrated tube 11 is closed with a sealing plug 14 provided with an appropriately shaped cavity 16 on the lower part thereof in order to direct the fluid inside the return conduit 15. The plug 14 is provided with an air vent 21 having the purpose of allowing the venting of excess air. A gasket 22 is interposed between the vent 21 and the plug 14.

According to one additional embodiment (not shown), the end 13 of the calibrated tube 11 may be originally closed, in such a manner as to not envisage any additional closure element. The position within the calibrated tube 11 of the return conduit 15 indeed makes possible the elimination of any air locks within the communication chamber 16.

The flow meter 1 illustrated therefore, forms a sealed circuit for a by-pass flow rate which is drawn from the conduit 2 and subsequently re-introduced into the same conduit 2. Such a circuit is made up of the tap channel 6, the channel 9, the calibrated tube 11, the return conduit 15, the channel 10 and the discharge channel 7.

In general, a float is interposed between the calibrated tube 11 and the return conduit 15, the float being free to slide in a direction parallel to the axis of the calibrated tube. Preferably, the float has a portion with an essentially toroidal shape and an extension with a conical profile. In the illustrated embodiment, the flow meter 1 is provided with a float 18 (figure 3), which is provided with a head portion 20 the outer surface of which is slidable over the inner surface of the calibrated tube 11, the float being also slidable over the return conduit 15 with passes through a central hole 19 in the float 18 itself. Alternatively, the float 18 may slide over the return conduit 15 without coming into contact with the inner walls of the calibrated tube 11.

Figures 4a-4b-4c illustrate, respectively, three possible example embodiments of the return conduit 15. According to such embodiments, differing from the solution adopted in traditional flow meters, cross sectional variation within the calibrated tube 11 is not obtained by adopting a conical tube 11, but by conferring an at least partly inclined vertical profile onto the return conduit 15. In particular, the return conduit 15 of the flow meter in figure 4a has a slightly conical vertical section (conicity D/d), being convergent in the upwards direction. In this embodiment, the float 18 is guided, in its vertical movements, by the cylindrical calibrated tube 11.

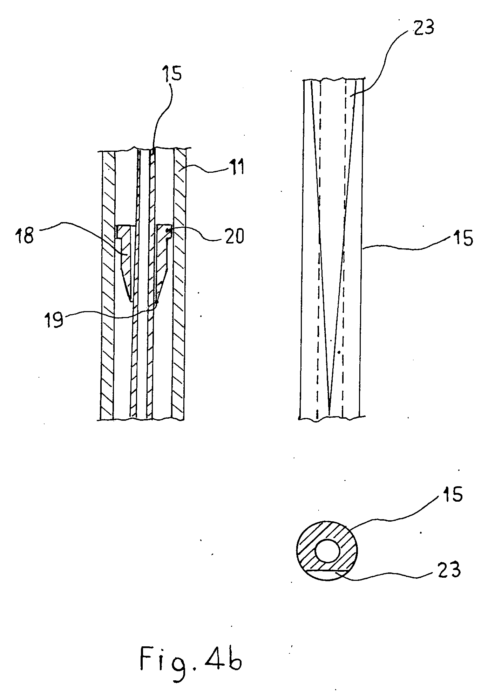

The return conduit 15 of the flow meter illustrated in figure 4b has a thinned down portion 23, for example through the partial milling of the surface layer of such portion. In this case the float 18 is guided by the return tube 15.

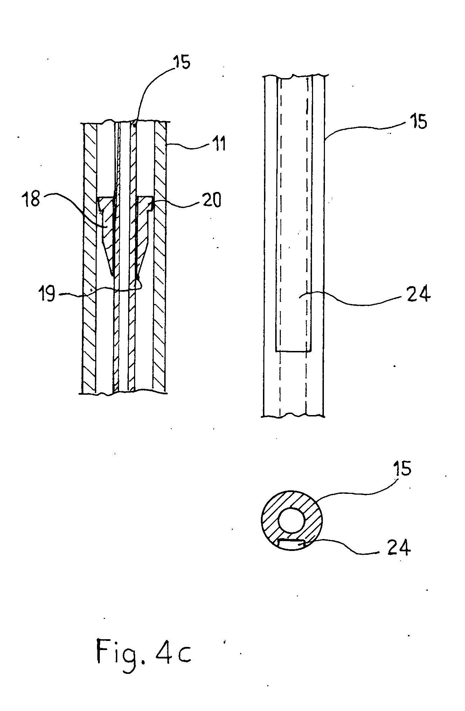

The return conduit 15 of the flow meter in figure 4c is externally tooled, for at least a part of its outer surface, so as to obtain an inclined hollow 24. In this case the return conduit also functions as a guide for the float 18.

Clearly the flow meter 1 may also be made by using a cylindrical return conduit 15 and a conical calibrated tube.

So as to lubricate, using the fluid, the surface of the float 18 which slides both over the calibrated tube 11, and over the return conduit 15, or alternatively only over the return conduit 15, the coupling between the float 18 and said elements 11 and 15 may provide sufficient backlash for the passage of a part of the by-pass flow rate. Such backlash may be increased in the case in which the fluid developing within the flow meter has a high density, such as for example in the case of an oil. The float 18 may be moved along the calibrated tube between its starting position C and its end stroke D, so as to indicate, for each intermediate position between C and D, a corresponding portion of the graduated scale of the calibrated tube 11.

In the flow meter 1 shown in figures 1-2 the calibrated tube 11 is perpendicular to the connecting portions 8. Consequently the flow meter 1 substantially extends in a direction parallel to the conduit 2, it may in any case be mounted both horizontally and vertically with respect to the ground.

An additional embodiment (not shown) provides the calibrated tube 11 both to be coupled to the connecter 8 in such a manner as to be continuous with the connecter 8 and perpendicular to the conduit 2. In this embodiment the channels 9 and 10 do not have any curves or elbows.

The operation of the flow meter 1 provides the conveyance of a by-pass flow rate from the conduit 2 to the tap channel 6. The by-pass flow rate flows through the above mentioned circuit and moves the float 18 up to a defined height within the calibrated tube, between positions C and D, the height corresponding to a flow rate flowing within the conduit 2, readable on the graduated scale present on the calibrated tube 11. The by-pass flow rate flows from the calibrated tube 11 to the return conduit 15 through the communication chamber 16, pushed along by the favourable pressure gradient, and returns to the conduit 2, downstream of the constriction 5, through the remaining part of the circuit.

Cleaning and maintenance operations of the flow meter 1 are extremely simple and economical. In the case in which the flow meter is provided with the plug 14, it is in fact sufficient to remove the plug 14 in order to gain access to the volumes within the calibrated tube 11 and the return conduit 15, without the necessity for any welding operations.

In addition, the float is guided by the return conduit and is therefore subject, during its movements, to less vibrations and/or fluctuations with respect to the floats of traditional flow meters, being therefore extremely stable.

The linear extension of the circuit is minimal and consequently also the losses of load of the flow meter 1 are minimised.

The use of plastic for the manufacture of the return conduit 15 allows reducing to a minimum the contamination of the tube itself and possibly the formation of organic or inorganic residues which may obstruct it.

The overall dimension of the flow meter 1 is less than that of traditional flow meters and the possibility of using plastic materials for the manufacture of some of its parts also allows minimising the weight.

The small number of pieces necessary for the manufacture of the flow meter 1, the simplicity of the industrial manufacture of such pieces, the possibility of using plastic and light materials, allows the attainment of a strong reduction in costs and production times. Furthermore, the reduction in the number of welds and seals reduces the risk of leakage and significantly simplifies cleaning operations.

## Claims

1. A flow rate measuring device of the diaphragm type comprising a calibrated tube, a moving float and a return conduit, **characterised in that** said return conduit is inside the calibrated tube.

2. The flow rate measuring device according to claim 1, **characterised in that** said calibrated tube is conical.

3. The flow rate measuring device according to claim 1 or claim 2, **characterised in that** the calibrated tube and the return conduit are coaxial.

4. The flow rate measuring device according to one of the preceding claims, **characterised in that** the calibrated tube is in communication with the return conduit through a chamber.

5. The flow rate measuring device according to claim 4, **characterised in that** said chamber is formed within a closure element of the calibrated tube.

6. The flow rate measuring device according to claim 4, **characterised in that** said chamber is provided with an air vent.

7. The flow rate measuring device according to the preceding claims, **characterised in that** said return conduit is in part conical and is associated with an external cylindrical tube.

8. The flow rate measuring device according to the preceding claims, **characterised in that** said float is positioned internally with respect to said calibrated tube.

9. The flow rate measuring device according to the preceding claims, **characterised in that** said float is movable between a bottom portion of said calibrated tube and said closure element.

10. The flow rate measuring device according to one of the claims 1 to 3, **characterised in that** said float is interposed between the calibrated tube and the return conduit and is slidingly coupled both to the calibrated tube, and to the return conduit.

11. The flow rate measuring device according to one of the claims 1 to 3, **characterised in that** said float is interposed between the calibrated tube and the return conduit and is coupled in a sliding manner to the return conduit, a gap being present between the float and the calibrated tube.

12. The flow rate measuring device according to claims 10-11, **characterised in that** said float has at least one substantially toroidal part.

13. The flow rate measuring device according to claims 11-12, **characterised in that** said float is provided with a central hole through which runs the return conduit.

14. The flow rate measuring device according to the preceding claims, **characterised in that** the calibrated tube communicates with a section of the main tube upstream of the diaphragm and the return conduit communicates with a section of the same main tubing downstream of the diaphragm.

15. The flow rate measuring device according to the preceding claims, **characterised in that** the calibrated tube is at least in part transparent and/or graduated.

16. The flow rate measuring device according to the preceding claims, **characterised in that** the return conduit is made of plastic material.

17. The flow rate measuring device according to the preceding claims, **characterised in that** the return conduit is made of metallic material.

18. Apparatus for measuring the flow rate of a fluid in a main tube, **characterised by** comprising the flow rate measuring device according to claim 1, said measuring device being installed in series or in parallel with said main tube.

19. Use of the flow rate measuring device according to claim 1 for measuring the flow rate of a fluid in a main tube.
